Europäisches Patentamt

European Patent Office

Office européen des brevets

(11) Publication number: **0 022 828**
**B1**

# EUROPEAN PATENT SPECIFICATION

(45) Date of publication of patent specification: **04.09.85**

(21) Application number: **80900228.0**

(22) Date of filing: **11.01.80**

(86) International application number:
**PCT/US80/00023**

(87) International publication number:
**WO 80/01513 24.07.80 Gazette 80/17**

(51) Int. Cl.⁴: **G 01 F 1/32, G 01 F 1/86, G 01 N 9/24**

(54) **A METHOD OF AND APPARATUS FOR DETERMINING THE MASS FLOW RATE OF A FLUID STREAM.**

(30) Priority: **11.01.79 US 2644**

(43) Date of publication of application:
**28.01.81 Bulletin 81/04**

(45) Publication of the grant of the patent:
**04.09.85 Bulletin 85/36**

(84) Designated Contracting States:
**AT CH DE FR GB LU NL SE**

(56) References cited:
**FR-A-2 259 354**
**US-A-2 978 899**
**US-A-3 680 375**
**US-A-3 719 073**
**US-A-3 729 995**
**US-A-3 881 352**
**US-A-4 010 645**

**Society of Automotive Engineers Journal,
Paper 760018, Published 23 February 1976, Joy**

The file contains technical information
submitted after the application was filed and
not included in this specification

(73) Proprietor: **J-TEC ASSOCIATES, INC.**
**317 Seventh Avenue, S.E.**
**Cedar Rapids, IA 52401 (US)**

(72) Inventor: **JOY, Robert D.**
**Route 4 Box 817**
**Cedar Rapids, IA 52401 (US)**
Inventor: **COLTON, Russel F.**
**857 16th St., S.E.**
**Cedar Rapids, IA 52403 (US)**
Inventor: **MAHANY, Richard J.**
**1341 Harold Dr., S.E.**
**Cedar Rapids, IA 52403 (US)**
Inventor: **THORNE, Glenn A.**
**1210 18th St., S.W.**
**Cedar Rapids, IA 52404 (US)**

(74) Representative: **Smith, Philip Antony et al
REDDIE & GROSE 16 Theobalds Road
London WC1X 8PL (GB)**

Courier Press, Leamington Spa, England.

## Description

The present invention is concerned with a method and apparatus for determining the mass flow rate of a fluid stream.

Numerous devices currently exist for measuring the volumetric flow of a moving fluid. Some of these devices employ the Karman vortex-street concept. According to the Karman concept, the erection of an object in a relatively moving fluid creates a fluctuating flow field composed of vortices in the wake of the object. In this regard, the relative movement of the fluid may occur either by passing the object through the fluid or by passing the fluid by an object.

Various attempts have been made to provide a velocity sensor which measures the rate of generation of vortices in the wake of an object. A reliable and relatively simple method and apparatus for velocity sensing which operates on the principle of detecting vortices is disclosed in Patent US—A—3,680,375. Basically, the above-cited method determines the rate of generation of vortices by directing a signal through the vortex street at a distance downstream from the object. As the vortices pass through the sonic signal, the pressure differential and mass rotation within each vortex cause an impinging sonic signal to be partially reflected and partially refracted as it passes through the vortex. In other words, when a vortex crosses the signal energy is scattered by the vortex. Hence, a portion of the directed signal is modulated by a decrease in energy caused by the reflection and refraction. Therefore, measurement of the modulation frequency is a direct measure of the fluid velocity.

Velocity sensors of the vortex-frequency vintage such as the above-referenced patent have been incorporated into flowmeters for measuring a gaseous flow within an enclosure, such as a pipe. In this usage, the velocity sensor is inserted in a body having a known cross-sectional area. When utilizing such a flowmeter, the volumetric flow is determined by multiplying the fluid velocity, as measured by the sensor, by the known cross-sectional area of the enclosure.

Although measurement of the volumetric flow of a fluid is useful in numerous fluid mechanical applications, many other applications necessitate the measure of the mass flow of the fluid. The mass flow of a fluid, as distinguished from the volumetric flow, is a product of the volumetric flow and the density of the fluid medium. Hence, the fluid density must be ascertained.

Although there are many ways to determine fluid density, numerous prior art devices have ascertained fluid density by traversing a sonic signal through the fluid from a signal transmitter to a signal receiver and using the relative energy received as a measure of the fluid density. These devices typically measure the voltage across the sonic signal receiver as an indication of the acoustic impedance of the fluid (which is the product of fluid density and the velocity of sound in the fluid). Prior art devices concerned with the acoustic impedance measurement for density include numerous U.S. Patents to Jack Kritz. A non-exclusive citation of mass flowmeter art employing this concept include U.S. Patents 3,020,759 and 2,959,054 to Welkowitz; 2,991,650 to Katzenstein; and 3,188,862 to Roth.

US—A—3 719 073 describes the determination of mass flow by sensing the frequency and amplitude of fluctuations in an oscillatory wake created by a cylindrical obstruction and a disc downstream of the obstruction. A single pressure sensor generates a signal whose frequency is proportional to the velocity fluid flow and whose amplitude is proportional to the density of the fluid and the square of the velocity. To eliminate the effect of sonic vibrations passing along the flow conduit it is preferred to use two diametrically opposite pressure sensors.

US—A—4 010 645 relates to a vortex flowmeter for measuring the volumetric and mass flow of gases and liquids. A single pressure responsive sensor provides an output whose frequency is proportional to volumetric flow and whose amplitude is proportional to mass flow. A density signal is generated by dividing the mass flow signal by the volumetric flow signal and indicates whether the liquid or gas is passing through the meter. The mass and volumetric flow signals are switched between gas and liquid indicators in dependence upon the density signal.

In the above regard, no mass flowmeter currently available both determines fluid density by measuring acoustical impedance in the above generally-described manner and determines volumetric flow using the preferred Karman vortex method. Although the possibility of such a flowmeter is alluded to by an applicant herein in an article entitled "Air Flow Measurement for Engine Control" which appeared in the February 1976 issue of the *Society of Automotive Engineers Journal* (SAE Paper Number 760018), no significant embodiment was known or disclosed at the time of that article.

After determining the density of the fluid, the density is often converted to a standard value. The mathematical conversion to a standard value, such as ambient conditions, requires measurement of the temperature of the fluid.

Existing flowmeters, including those utilizing the vortex-frequency concept, employ additional sensors to determine fluid density and temperature. Hence, in these existing meters designed to measure mass flow, one sensor is used to determine the volumetric flow and additional sensors determine the density and temperature parameters.

Numerous disadvantages occur when using multiple sensors to determine the component parameters of mass flow. One practical handicap is the cumbersome additional circuitry which must be engineered into a flowmeter often expected to operate in a small, enclosed environment.

A second problem associated with the employment of multiple sensors is the interference of one sensor with another. The physical proximity of neighboring sensors can spuriously spawn erroneous sonic and electrical components. To minimize interference, prior art devices commonly separate the sensors physically, meaning that the parameters are detected at different locations along the vortex street. For example, a pressure sensor might be placed upstream or downstream of a velocity sensor. Unfortunately, when this sensor positional discrepancy occurs in transient flow conditions, a pressure differential between the separated sensors is ignored. This practice is especially troublesome in rapidly changing flow environments, such as, for example, intake or exhaust gases of an internal combustion engine. Attempts to compensate for the pressure differentials are generally onerous since pressure variations are proportional to the square of velocity.

Considering further the incorporation of multiple sensors into a mass flowmeter, in some structural configurations the presence of an additional sensor along the vortex street can itself cause flow-field modifications in downstream sensing regions.

An additional problem closely akin to the first two is the added expense of additional sensor hardware. Typically the physical construction, mounting, and protection of the actual sensing element is the most costly aspect of the measurement device. Hence, duplicity of these expenses is not economically desirable.

The present invention provides a method of determining the mass flow rate of a fluid stream comprising generating Karman vortices in the fluid stream, directing a sonic signal through the fluid stream across the vortex path from a point of transmission to a point of reception, measuring the rate of passage of Karman vortices as a measure of the flow velocity by their modulation of the sonic signal, measuring the fluid density and combining the measured velocity and density to give mass flow which is characterised by detecting the transit time of the signal as a measure of the temperature, measuring the amplitude of the signal at the point of reception as a measure of the acoustic impedance, multiplying the transit time and the received amplitude as a measure of density and multiplying by the flow velocity to obtain the mass flow rate.

The invention further provides apparatus for carrying out such a method as defined in claim 5.

An advantage of the illustrated embodiments is the utilization of a single sensor for the measurement of volumetric flow, fluid density, and/or fluid temperature, such measurements being spatially made in the same region.

Another advantage of the structure of the invention is that temperature and density can be averaged over a complete signal path length, thus reducing errors due to thermal layering or other temperature or pressure variations.

Still another advantage of the structure of the invention is the realization of substantial cost savings by using a single sensor to perform measurements heretofore performed by a plurality of sensors.

Summary
In accordance with principles of this invention, selected properties of a sonic signal are sensed to determine the temperature, density, pressure, and the velocity and thereby the mass flow, of a fluid stream traversed by the signal. The sensory measurements are conducted using modifications of existing vortex volumetric flowmeter methods and apparatus. The modifications facilitate measurement of mass flow by intermediary measurement of the relative energy of the signal and the time delay in signal passage from a signal directing means to a signal receiving means.

In one embodiment of the above-cited vortex volumetric flowmeter, a vortex strut is mounted in a fluid stream with sonic transducers situated on either side of a resulting wake. One sonic transducer is a directing or transmitting transducer and the other is a receiving transducer. The directing transducer transmits a sonic signal which is modulated by Karman vortices (as discussed above) and detected by the receiving transducer. The modulation frequency of the received signal is a direct measure of the fluid velocity of volumetric flow.

The present invention comprising a method as set out in claim 1 and an apparatus as set out in claim 5 employs substantially the same structure as existing vortex volumetric flowmeters but, in addition, capitalizes on additional signal characteristics to measure fluid temperature, pressure, and density, these measurements being used in the determination of mass flow.

Regarding the measurement of fluid temperature, which is used to determine density, the absolute, or Kelvin, temperature $T_k$ is commonly given by the mathematical relationship:

$$C=\sqrt{KRT_k}$$

where C is the speed (meters per second) of sound in the fluid, K is the ratio of specific heats, and R is the universal gas constant. The transit time t of the signal in traversing the distance between the two transducers is a function only of the distance L between the transducers and the speed of sound in the fluid. More precisely, the transit time of the acoustic signal is:

$$t=\frac{L}{C}=\frac{L}{\sqrt{KRT_k}}$$

where K and R as defined above. Thus, by measuring the transit time t for the signal to traverse the known distance between the transducers, the absolute or Kelvin temperature $T_k$ can be calculated.

The actual measurement of the transit time may be made in several ways. For instance, the signal can be transmitted in a pulse mode so that the delay between the application of energy to the transmitting transducer at a known time and reception thereof by the receiving transducer at a later time can be detected. Alternatively, when transmitting a continuous signal as opposed to a pulse mode, a comparison can be made between the phase of the signal as transmitted and the signal as received to determine the time delay. Similarly, an amplitude or frequency modulation may be imposd on the continuously transmitted sonic signal, with a phase comparison being similarly performed on the modulated signal.

Regarding the measurement of pressure and density, the energy of the received signal is given by the expression:

$$e_o = \left(\frac{4Z_f Z_T}{[Z_f+Z_T]^2}\right) E_T N \left[\frac{R_R A_T}{R_T A_T}\right]^{\frac{1}{2}} e^{\frac{-mL}{2}}$$

where

$e_o$ = the energy of the received signal
$Z_f$ = the acoustic impedence of the fluid
$Z_T$ = the acoustic impedence of the transducers
$e$ = standard base of natural logarithm
$E_T$ = voltage applied to the transmitting transducer
$m$ = absorption coefficient of ultrasonic energy
　　 in air
$L$ = the spacing between the transducers
$N$ = efficiency of the transducers
$R_R$ = resistance of receiving transducer
$R_T$ = resistance of transmitting transducer
$A_R$ = area of receiving transducer
$A_T$ = area of transmitting transducer

With respect to the above expression, $Z_T$ is generally of the order of $30 \times 10^6$ kilograms per meter$^2$ second while $Z_f$ is generally of the order of 400 kilograms per meter$^2$ second. Thus, since $Z_T \gg Z_f$, the above expression can be simplified as:

$$e_o = \left(\frac{4Z_f}{Z_T}\right) E_T N \left[\frac{R_R A_T}{R_T A_R}\right]^{\frac{1}{2}} e^{\frac{-mL}{2}}$$

For fixed transducer characteristics and applied voltage, W may be defined as:

$$W = \left(\frac{4}{Z_T}\right) E_T N \left[\frac{R_R A_T}{R_T A_R}\right]^{\frac{1}{2}}$$

so that $e_o$ may now be simplified as:

$$e_o = Z_f \, e^{\frac{-mL}{2}} W$$

For small transducer spacings,

$$e^{\frac{-mL}{2}}$$

is a constant. That is,

$$u = e^{\frac{-mL}{2}} \qquad (u = constant)$$

so that

$$e_o = Z_f \, uW$$

or, solving for $Z_f$:

$$Z_f = \frac{e_o}{uW}$$

The impedance of the fluid ($Z_f$) is also the product of the density of the fluid ($\rho$) and the speed of sound in the fluid (C). Thus, equating the two expressions for $Z_f$:

$$\frac{e_o}{uW} = \rho C$$

and solving for density

$$\rho = \frac{e_o}{CuW} = \frac{e_o^t}{uWL}$$

By appropriate numerical substitution into the above formulae, the density of the fluid may be determined.

Since the mass flow of a fluid is the product of the volumetric flow of the fluid, the cross-sectional area of the fluid stream, and the density of the fluid as previously mentioned, the measurements of fluid temperature, fluid pressure, and fluid density as briefly described above, in conjunction with the measurement of volumetric flow such as that disclosed in the Joy et al. 3,680,375 patent, yield a measurement of the mass flow of the fluid.

Although the above-described measurements may be conducted simultaneously, the methods and apparatus of the invention permit the selective, independent measurement of fluid temperature, pressure, and density, without regard to the volumetric flow.

In using a system comprising a transmitting transducer and a receiving transducer to perform the measurements of volumetric flow of a fluid, the temperature and pressure of the fluid, and/or the density of the fluid, the invention measures at one spatial location the mass flow of a fluid with minimal apparatus and complexity, thereby overcoming the above-discussed disadvantages of the prior art.

Brief description of the drawings

The foregoing and other objects, features, and advantages of the invention will be apparent from the following more particular description of preferred embodiments as illustrated in the accompanying drawings in which like referenced characters refer to the same parts throughout the various views. The drawings are not necessarily to scale, emphasis instead being placed upon illustrating the principles of the invention.

Fig. 1 is a perspective view of a structure suitable for supporting the transducer elements.

Fig. 2 is a schematic diagram of electronics suitable for a pulsed mode for the measurement of fluid temperature and volumetric flow;

Fig. 3 is a schematic diagram of electronics suitable for a signal phase comparison used in the determination of fluid temperature;

Fig. 4 is a schematic of electronics suitable for a constant phase, controlled-frequency temperature measurement; and

Fig. 5 is a schematic of electronics suitable for volumetric and mass flow outputs as well as temperature measurement.

Description of the preferred embodiment

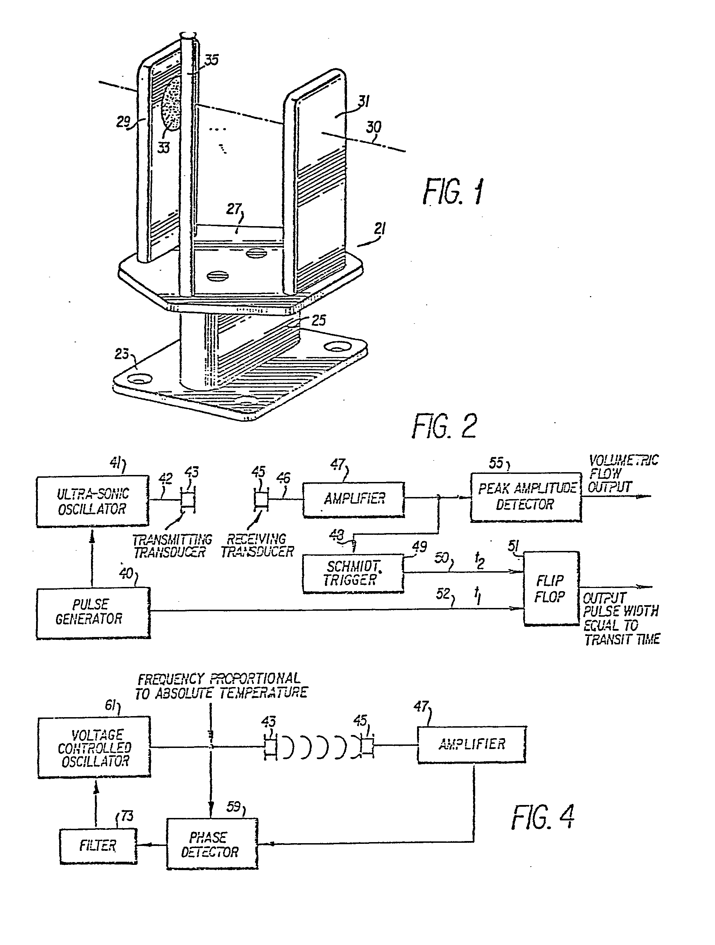

Fig. 1 is a pictorial diagram of a structure for mounting sonic transducers in the wake of a vortex strut. It should be understood that, although the present invention is illustrated and discussed with reference to this particular embodiment, this invention is not limited in application to any one specific structural or functional embodiment. Moreover, as used herein, the term "sonic" means acoustic, ultra-sonic and sub-sonic waves, with ultra-sonic waves being preferred.

The structure illustrated in Fig. 1 comprises a base 21 formed of a base plate 23, a strut 25, and a support plate 27. The base plate 23 supports the strut 25, which is, preferably, in the form of a vertical air foil with respect to the base plate. The support plate 27 is located on top of the strut 25, parallel to the base plate. The base 21 can be formed of three separate components, however, it is preferably formed as a single unit. As illustrated in Fig. 1, the support plate projects outwardly above the strut in a manner somewhat similar to wings.

Projecting upwardly from the support plate 27 at the outer end there are first and second transducer struts 29 and 31. The transducer struts include apertures 33 wherein suitable directing means, also referred to as transmitting means, and receiving means, such as sonic directing and receiving transducers, can be mounted, one in each strut. A vortex strut 35 is located in front of the axis 30 that intersects the apertures of the transducer struts 29 and 31. The vortex strut is illustrated as cylindrical. In cross-section, however, it can take on any suitable form, such as oval, triangular or diamond, for examples.

Figs. 2, 3, and 4 are schematic diagrams of electronics suitable for determination of fluid temperature. The respective electronic systems are used, for example, in combination with transducers mounted in the manner illustrated in Fig.

1. As previously explained, fluid temperature is directly related to the speed of sound in the fluid which, in turn, is dependent upon the distance between the transducers and the transit time of the sonic signal traversing the distance between the transducers. Hence, when both the distance between the two transducers and the transit time of the sonic signal traveling therebetween are known, the absolute temperature can be determined from the formulas previously discussed.

Fig. 2 is a schematic diagram of electronics suitable for a pulsed ultra-sonic mode for the measurement of both the volumetric flow and transit time of the sonic signal (and hence the fluid temperature). Fig. 2 comprises: a pulse generator 40; an ultra-sonic oscillator 41; a directing or transmitting transducer 43; a receiving transducer 45; an amplifier 47; a Schmidt trigger 49; a flip-flop 51; and, a peak amplitude detector 55. As previously described with respect to Fig. 1, the directing transducer 43 is mounted on one side of the wake of the vortex strut 35; and the receiving transducer 45 is mounted on the other side of the wake of the vortex strut in the path of the directing transducer signal.

Again with reference to Fig. 2, pulse generator 40 supplies a pulsed signal having a square waveform to the ultra-sonic oscillator 41 which in turn applies the signal, now oscillated, to the transducer 43 via a suitable connecting wire 42. The sonic signal directed by the transducer 43 passes through the wake of the vortex strut 35 and is modulated by the fluctuating flow field formed in the wake of the strut by the generation of a Karman vortex street. The modulated sonic signal is received by the receiving transducer 45 and applied to the amplifier 47 via a suitable connecting wire 46. The amplified signal is, in turn, fed via wire 48 to Schmidt trigger 49. The Schmidt trigger 49 conditions the amplified modulated signal in a square waveform for further transmission via wire 50 to flip-flop 51.

Flip-flop 51 receives input from pulse generator 40 via wire 52 as well as from trigger 49, both inputs being a square waveform. For example, when pulse generator 40 produces a pulse at time $t_1$, flip-flop 51 receives the pulse and initiates its own positive pulse. Meanwhile, the original pulse is being transmitted as above described through elements 41, 43, 45, 47 and 49, arriving at flip-flop 51 at a time $t_2$. At time $t_2$, flip-flop 51 terminates the positive pulse initiated by flip-flop 51 at time $t_1$, thus forming an output pulse having a width which indicates the transit time of the sonic signal.

Fig. 2 also illustrates the measurement of volumetrics flow by using the peak amplitude detector 55. This measurement is similar to that performed in US—A—3,680,375 and to that discussed herein with reference to Fig. 2. However, if the pulse rate of the output from amplifier 47 is higher than the highest expected vortex modulation as determined by detector 55; and, the time constant associated with detector 55 is long compared to the pulse rate, but short when compared to the vortex modulation frequency, then the output of detector 55 will be a continuous waveform representing the vortex modulation.

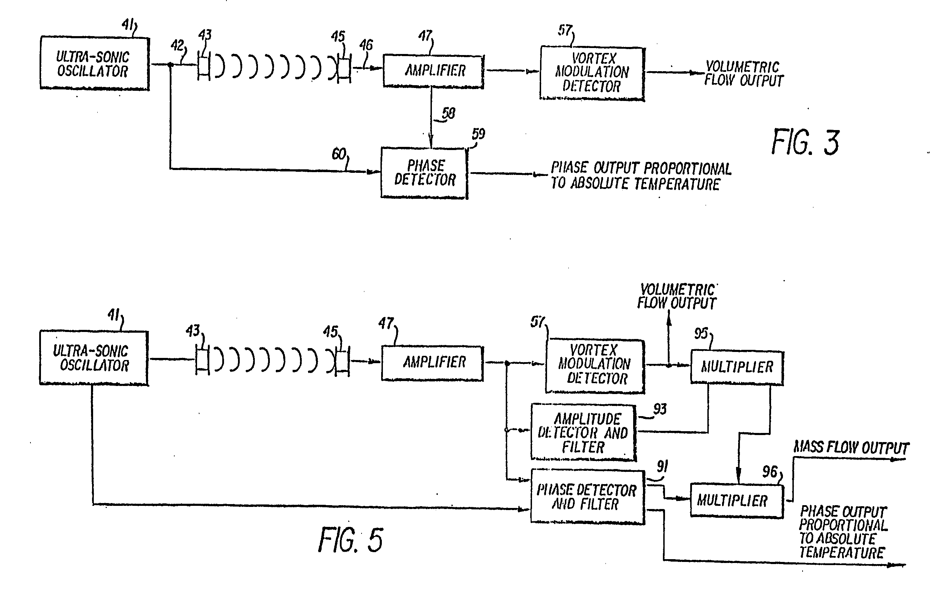

Fig. 3 comprises: an ultra-sonic oscillator 41; a directing or transmitting transducer 43; a receiving transducer 45; an amplifier 47; a vortex modulation detector 57; and a phase detector 59. The ultra-sonic oscillator 41 generates a sonic signal and applies it to the transducer 43 via a suitable connecting wire 42. The sonic signal directed by the transducer 43 passes through the wake of the vortex strut 35 and is modulated in the same manner as described above. The modulated sonic signal is received by the receiving transducer 45 and applied to the amplifier 47 via a suitable connecting wire 46. The amplified signal is, in turn, applied to the vortex modulation detector 57 which can comprise, for example: a demodulator that detects the modulation signal and generates pulses at the modulation frequency, a pulse shaper, and a counter, all such elements as described in U.S. patent 3,680,375 to Joy et al. The relationship between the count output of the vortex modulation detector 57 and the relative velocity or volumetric flow of the fluid is understood in terms of the Strouhal number formula well known in the prior art and explained by the Joy et al. patent.

Thus described, Fig. 3 depicts an electronic system for determining the transit time by comparing the phase delay or phase difference between the sonic signal at the transducer 43 and the sonic signal as received at the transducer 45. For this purpose, the sonic signal generated from the ultra-sonic oscillator 41 and the amplified modulated signal from amplifier 47 are supplied via suitable connecting wires 58 and 60 to phase detector 59 as inputs for the phase comparison. The phase difference or phase delay is proportional to the absolute temperature of the fluid plus a constant for each configuration which relates the phase angle to transducer spacing at a temperature of absolute zero.

Fig. 4 represents an alternative method for measuring the absolute temperature of the fluid. Fig. 4 comprises: a voltage feed-back controlled oscillator 61; the directing or transmitting transducer 43; the receiving transducer 45; the amplifier 47; the phase detector 59; and a filter 73. As in Fig. 3, the phase detector 59 in Fig. 4 compares the transmitted and received signal phases. However, Figs. 3 and 4 differ in that the filtered output of phase detector 59 and filter 73 is applied to the voltage feed-back controlled oscillator 61 so as to maintain a constant phase shift across the transducer spacing. In this configuration, the frequency output of the voltage controlled oscillator 61 is proportional to the average temperature of the fluid and is read as a proportional indicator thereof.

If, in rare instances, the spacing of the transducers in any configuration discussed herein pertaining to the measurement of fluid temperature is large as compared to the wave length of the sonic signal, then certain ambiguities could occur in the above-described time delay measurements. However, these ambiguities can be easily avoided by imposing on the directed signal a modulation whose wave length in the fluid is sufficiently long.

Fig. 5 is a schematic diagram of electronics suitable for determination of the volumetric and mass flow outputs as well as temperature measurement. Fig. 5 combines the alternative temperature measuring apparatus and method of Fig. 3 with apparatus and method for determining fluid density. Since the transmission of the sonic energy between the two transducers is a direct function of the fluid density and temperature, a measure of the received sonic energy can be used to define the density parameter. Fig. 5 is one of many possible configurations for performing these measurements and comprises: the ultra-sonic oscillator 41; the directing or transmitting transducer 43; the receiving transducer 45; the amplifier 47; the vortex modulation detector 57; a phase detector and filter 91; an amplitude detector and filter 93; and, multipliers 95 and 96.

The temperature measurement performed in Fig. 5 is similar to the measurement performed in Fig. 3 in that the phase output of phase detector and filter 91 is directly proportional to the transit time t or, conversely, inversely proportional to the absolute temperature $T_k$ of the fluid. It will be appreciated that alternative electronic configurations may be designed within the scope of the invention such as, for example, the utilization of the electronic systems of Fig. 2 and 4 for temperature measurement.

In Fig. 5 the received sonic signal, after amplification by amplifier 47, is fed to an amplitude detector and filter 93 which registers the energy amplitude of the received signal. More specifically, the output of the amplitude detector and filter 93 is the term

$$\frac{e_o}{uW}$$

which appears in the expression for density cited above. The received sonic signal is also fed from amplifier 47 to the vortex modulation detector 57, the output of which is an indication of volumetric flow.

Since the fluid mass flow is a mathematical product of the volumetric flow, the cross-sectional area of the fluid stream, and the fluid density, multiplier 95 multiplies the volumetric flow as output from the vortex modulation detector 57 by the $e_o/(uW)$ term which is the output of the amplitude detector and filter 93. Recalling that fluid density $\rho$ is given by the earlier explained expression

$$\rho = \frac{e_o\, t}{uWL}$$

multiplier 96 multiplies the output of multiplier 95 by the term

$$\frac{t}{L}$$

so as to yield an indication of the fluid mass flow. In the above regard, the L term can be obtained by scaling the grain function at either phase detector and filter 91 or multiplier 96.

Throughout the foregoing discussion of the Figs. it should be understood that various mathematical factors may be introduced into the circuitry as scaling or gain constants. In the instance of the mass computation of the preceding paragraph, for example, the L term can be obtained by scaling the gain function at either phase detector and filter 91 or multiplier 96. Likewise, the cross-sectional area factor may be introduced as by scaling the gain function at either multiplier 95 or multiplier 96.

In the above regard, the K (the ratio of specific heats) and R (Universal Gas Constant) terms may be introduced, for example, as scaling factors in the phase detector and filter 91 of Fig. 5 and, the phase detector 59 of Figs. 3 and 4. In the same manner, the factors u and W in the density formulae may be introduced as scaling or gain factors in the amplitude detector and filter 93 of Fig. 5.

The temperature and density measurement methods described above may contain varying components due to the vortex frequency. However, since the vortex frequency is generally large as compared to the fluctuations in either temperature or fluid density, these measurements can be averaged or smoothed to remove the high frequency vortex components.

It will be appreciated by those skilled in the art that the electronic systems illustrated in Fig. 2, Fig. 3, Fig. 4 and Fig. 5 are merely exemplary and may take on many different, specific forms. The transducer 41 may contain an oscillator whose signal is suitably amplified prior to application to the transmitting transducer 43. In addition, the amplifier 47 may include a suitable preamplifier. The detector 57 may be any one of various types. For example, the detector can be a synchronous demodulator operating at the frequency of oscillation of the transmitter oscillator. Moreover, the pulse output from the detector 57 may be applied to a digital-to-analog converter to obtain an analog output signal, if desired, so that the output signal may be directly applied to an analog indicating instrument.

While the invention has been particularly shown and described with reference to the preferred embodiments thereof, it will be understood by those skilled in the art that various alterations in form and detail may be made therein without departing from tbe scope of the claims. For example, the density measurement performed in Fig. 5 may also be performed by utilizing a control voltage generated in a gain controlled amplifier.

**Claims**

1. A method of determining the mass flow rate of a fluid stream comprising generating Karman vortices in the fluid stream, directing a sonic signal through the fluid stream across the vortex path from a point of transmission to a point of reception, measuring the rate of passage of Karman vortices as a measure of the flow velocity by their modulation of the sonic signal, measuring the fluid density and combining the measured velocity and density to give mass flow characterised by detecting the transit time of the signal as a measure of the temperature, measuring the amplitude of the signal at the point of reception as a measure of the acoustic impedance, multiplying the transit time and the received amplitude as a measure of density and multiplying by the flow velocity to obtain the mass flow rate.

2. A method as claimed in claim 1 in which the transmitted signal comprises a sequence of pulses and the transit time is measured by the time delay between the transmission and reception of a pulse.

3. A method as claimed in claim 1 in which the transmitted signal is continuous and the transit time is measured by controlling the frequency of the transmitted signal to maintain a constant phase shift between the transmitted and received signals and using the frequency as a measure of transit time.

4. A method as claimed in claim 1 in which the transit time is measured by the phase shift between the transmitted and received signals.

5. Apparatus for determining the mass flow rate of a fluid stream comprising:

a strut (35) mounted so as to be inserted into said fluid thereby creating a disturbance in said fluid;

sonic signal directing means (43) for directing a sonic signal toward said disturbance so that said disturbance modulates said sonic signal;

sonic signal receiving means (45) for receiving a sonic signal, said sonic signal receiving means mounted so as to receive said modulated sonic signal; and

first detecting means (57) connected to said receiving means for detecting the modulation frequency of said received modulated sonic signal; characterised by

second detecting means (93) connected to said receiving means for detecting the amplitude of said received modulated sonic signal;

third detecting means (91) connected to said directing means and said receiving means for detecting the transit time of the modulated sonic signal as said signal traverses the distances between said transmitting and receiving means; and, multiplying means (96) for multiplying the amplitude of the received sonic signal, the modulation frequency of the received sonic signal, and the transit time of the sonic signal.

6. Apparatus for determining the mass flow rate of a fluid stream as claimed in claim 5 further comprising means (40) for generating a pulsed sonic signal comprising sequential sonic pulses; and wherein said third detecting means includes detection of the time delay between the direction and reception of a sonic pulse.

7. Apparatus for determining the mass flow rate of a fluid stream as claimed in claim 5 wherein said third detection means (91) includes detection of the phase difference between the sonic signal as directed and the modulated sonic signal as received.

8. Apparatus for determining the mass flow rate of a fluid stream as claimed in claim 7, characterised by a feed-back controlled sonic signal generator (61) for feeding the directing means (43) said phase difference detector means controlling the signal generator to adjust the frequency such that the phase shift is maintained constant, and means for detecting the frequency as a measure of the temperature of the fluid stream.

**Patentansprüche**

1. Verfahren zur Bestimmung des Massendurchsatzes eines Strömungsmittelstromes, bei welchem im Strömungsmittelstrom eine Karman'sche Wirbelstraße erzeugt wird, ein Schallsignal quer zur Wirbelstraße durch den Strömungsmittelstrom von einem Punkt der Aussendung zu einem Empfangspunkt geschickt wird, die Rate des Vorbeilaufs Karman'scher Wirbel als ein Maß für die Strömungsgeschwindigkeit durch die Modulation des Schallsignals aufgrund der Wirbel gemessen wird, die Dichte des Strömungsmittels gemessen wird und der Meßwert entsprechend der Strömungsgeschwindigkeit sowie der Meßwert entsprechend der Dichte miteinander kombiniert werden, um den Massendurchsatz zu erhalten, dadurch gekennzeichnet, daß die Laufzeit des Schallsignals als Maß für die Temperatur bestimmt wird, daß die Amplitude des Schallsignals am Empfangspunkt als Maß für die akustische Impedanz gemessen wird, daß die Laufzeit und der empfangene Amplitudenwert als Maß für die Dichte miteinander multipliziert werden und daß eine Multiplikation mit der Strömungsgeschwindigkeit zur Bestimmung der Massendurchsatzrate vorgenommen wird.

2. Verfahren nach Anspruch 1, bei welchem das ausgesendete Signal eine Folge von Impulsen aufweist und die Laufzeit durch Messung der Zeitverzögerung zwischen der Aussendung und dem Empfang eines Impulses gemessen wird.

3. Verfahren nach Anspruch 1, bei welchem das ausgesendete Signal kontinuierlich ist und die Laufzeit in der Weise bestimmt wird, daß die Frequenz des ausgesendeten Signales so geregelt wird, daß eine konstante Phasenverschiebung zwischen des ausgesendeten und den empfangenen Signalen aufrecht erhalten wird, wobei die Frequenz als ein Maß für die Laufzeit dient.

4. Verfahren nach Anspruch 1, dadurch gekennzeichnet, daß die Laufzeit aus der Phasenverschiebung zwischen den ausgesendeten und den empfangenen Signalen bestimmt wird.

5. Einrichtung zur Bestimmung der Massendurchsatzrate eines Strömungsmittelstromes, enthaltend:

eines Strebe (35), welche so in den Strömungsmittelstrom gesetzt ist, daß sie als Störkörper im Strömungsmittelstrom wirkt;

Einrichtungen (43) zur Aussendung eines Schallsignals in Richtung auf die von der Strebe erzeugte Turbulenz, so daß die Turbulenz das Schallsignal moduliert;

Einrichtung (45) zum Empfang eines Schallsignals, welche so angeordnet sind, daß sie das genannte modulierte Schallsignal zu empfangen vermögen und Detektoreinrichtungen (57), welche mit den Einrichtungen zum Empfang des Schallsignals verbunden sind und zur Bestimmung der Modulationsfrequenz des empfangenen modulierten Schallsignales dienen; gekennzeichnet, durch

weitere Detektoreinrichtungen (93), welche mit den Einrichtungen zur Empfang des Schallsignals verbunden sind und zur Bestimmung der Amplitude des empfangenen modulierten Schallsignales dienen;

dritte Detektoreinrichtungen (91), welche mit den Einrichtungen zum Aussenden des Schallsignals und den Einrichtungen zum Empfang des Schallsignals verbunden sind, um die Laufzeit des modulierten Schallsignales, während das Signal die Strecke zwischen den Einrichtungen zum Aussenden des Schallsignals und den Einrichtungen zum Empfang des Schallsignals durchläuft, zu messen und

Multiplikationseinrichtungen (96) zum Multiplikation der Amplitude des empfangenen Schallsignals, der Modulationsfrequenz des empfangenen Schallsignals und der Laufzeit des Schallsignals.

6. Einrichtung zur Bestimmung der Massendurchsatzrate eines Strömungsmittelstromes gemäß Anspruch 5, mit Mitteln (40) zur Erzeugung eines gepulsten Schallsignales mit einer Folge von Schallimpulsen, wobei die dritten Detektoreinrichtungen die Zeitverzögerung zwischen der Aussendung und dem Empfang eines Schallimpulses zu bestimmen vermögen.

7. Einrichtung zur Bestimmung des Massendurchsatzrate eines Strömungsmittelstromes gemäß Anspruch 5, bei welcher die dritten Detektoreinrichtungen (91) eine Bestimmung der Phasendifferenz zwischen dem Schallsignal bei der Aussendung und dem modulierten Schallsignal beim Empfang vornehmen.

8. Einrichtung zur Bestimmung der Massendurchsatzrate eines Strömungsmittelstromes gemäß Anspruch 7, gekennzeichnet durch einen durch eine Rückkopplung geregelten Schallsignalgenerator (61) zur Speisung der Einrichtungen (43) zur Aussendung des Schallsignals, wobei die Detektoreinrichtungen zur Bestimmung der Phasendifferenz · den Schallsignal generator so steuern, daß die Frequenz in einer Weise eingestellt wird, daß die Phasenverschiebung konstant gehalten wird, sowie durch Einrichtungen zur Bestimmung der Frequenz als ein Maß der Temperatur des Strömungsmittelstromes.

## Revendications

1. Procédé de détermination du débit massique d'un courant de fluide, comprenant la création de tourbillons de Karman dans le courant de fluide, la direction d'un signal sonore dans le courant de fluide transversalement au trajet des tourbillons, d'un point d'émission à un point de réception, la mesure de la vitesse de passage des tourbillons de Karman sous forme d'une mesure de la vitesse du courant, du fait de leur modulation par le signal sonore, la mesure de la masse volumique du fluide et la combinaison de la vitesse mesurée. et de la masse volumique mesurée pour la formation d'un débit massique, caractérisé par la détection du temps de transit du signal sous forme d'une mesure de la température, par la mesure de l'amplitude du signal au point de réception sous forme d'une mesure de l'impédance acoustique, par la multiplication du temps de transit par l'amplitude reçue sous forme d'une mesure de la masse volumique, et par la multiplication par la vitesse du courant afin que le débit massique soit obtenu.

2. Procédé selon la revendication 1, dans lequel le signal émis comprend une séquence d'impulsions et le temps de transit est mesuré sous forme du retard entre l'émission et la réception d'une impulsion.

3. Procédé selon la revendication 1, dans lequel le signal émis est continu et le temps de transit est mesuré par réglage de la fréquence du signal émis afin qu'un déphasage constant soit maintenu entre les signaux émis et reçus, et il comprend l'utilisation de la fréquence comme mesure du temps de transit.

4. Procédé selon la revendication 1, dans lequel le tremps de transit est mesuré par le déphasage entre les signaux émis et reçus.

5. Appareil de détermination du débit massique d'un courant de fluide, comprenant:

un montant (35) monté afin qu'il soit disposé dans le fluide et crée ainsi une perturbation dans le fluide,

un dispositif de direction d'un signal sonore (43) destiné à diriger un signal sonore vers la perturbation de manière que celle-ci module le signal sonore,

un dispositif de réception de signaux sonores (45) destiné à recevoir un signal sonore, le dispositif de réception étant monté afin qu'il reçoive le signal sonore modulé, et

un premier dispositif de détection (57) raccordé au dispositif de réception et destiné à détecter la fréquence de modulation du signal sonore modulé reçu, caractérisé par

un second dispositif de détection (93) relié au dispositif de réception et destiné à détecter l'amplitude du signal sonore modulé reçu,

un troisième dispositif de détection (91) connecté qu dispositif destiné à diriger et au dispositif de réception afin qu'il détecte le temps de transit du signal sonore modulé lorsque ce signal parcourt les distances comprises entre les dispositifs d'émission et de réception, et un dispositif multiplicateur (96) destiné à multiplier l'amplitude du signal sonore reçu, la fréquence de modulation du signal sonore reçu et le temps de transit du signal sonore.

6. Appareil destiné à déterminer le débit massique d'un courant de fluide selon la revendication 5, comprenant en outre un dispositif (40) générateur d'un signal sonore pulsé comprenant des impulsions sonores séquentielles, et dans lequel le troisième dispositif de détection assure la détection du retard entre la direction et la réception de l'impulsion sonore.

7. Appareil de détermination du débit massique d'un courant de fluide selon la revendication 5, dans lequel le troisième dispositif de détection (91) assure la détection de la différence de phase entre le signal sonore dirigé et le signal sonore modulé reçu.

8. Appareil de détermination du débit massique d'un courant de fluide selon la revendication 7, caractérisé par un générateur (61) de signaux sonores, commande par reaction et destiné à alimenter le dispositif destiné à diriger (43), le dispositif détecteur de déphasage commandant le générateur de signaux afin qu'il règle la fréquence d'une manière telle que le déphasage reste constant, et par un dispositif de détection du la fréquence sous forme d'une mesure de la température du courant de fluide.

**0 022 828**

FIG. 1

FIG. 2

FIG. 4

1

FIG. 3

FIG. 5